(19) Europäisches Patentamt / European Patent Office / Office européen des brevets

(11) **EP 4 110 057 B1**

(12) **EUROPEAN PATENT SPECIFICATION**

(45) Date of publication and mention of the grant of the patent:
**24.06.2026 Bulletin 2026/26**

(21) Application number: **21707704.9**

(22) Date of filing: **26.02.2021**

(51) International Patent Classification (IPC):
***A01N 43/653*** $^{(2006.01)}$ ***A01N 43/40*** $^{(2006.01)}$
***A01N 43/42*** $^{(2006.01)}$ ***A01N 43/50*** $^{(2006.01)}$
***A01N 43/56*** $^{(2006.01)}$ ***A01N 43/58*** $^{(2006.01)}$
***A01N 43/713*** $^{(2006.01)}$ ***A01N 43/78*** $^{(2006.01)}$
***A01N 43/80*** $^{(2006.01)}$ ***A01N 43/82*** $^{(2006.01)}$
***A01N 37/38*** $^{(2006.01)}$ ***A01N 37/52*** $^{(2006.01)}$
***A01P 3/00*** $^{(2006.01)}$

(52) Cooperative Patent Classification (CPC):
(C-Sets available)
**A01N 43/653** (Cont.)

(86) International application number:
**PCT/EP2021/054892**

(87) International publication number:
**WO 2021/170830 (02.09.2021 Gazette 2021/35)**

(54) **FUNGICIDAL COMPOSITIONS**

FUNGIZIDE ZUSAMMENSETZUNGEN

COMPOSITIONS FONGICIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2020 EP 20159938**

(43) Date of publication of application:
**04.01.2023 Bulletin 2023/01**

(73) Proprietor: **Syngenta Crop Protection AG**
**4058 Basel (CH)**

(72) Inventors:
- **LAMBERTH, Clemens**
  **4058 Basel (CH)**
- **HAAS, Ulrich, Johannes**
  **4058 Basel (CH)**

(74) Representative: **HGF**
**HGF BV**
**Benoordenhoutseweg 46**
**2596 BC The Hague (NL)**

(56) References cited:
**WO-A1-2018/204435** **WO-A1-2019/007839**
**WO-A1-2019/052898** **CA-A1- 3 071 569**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/653, A01N 37/38, A01N 37/52, A01N 43/40, A01N 43/42, A01N 43/50, A01N 43/56, A01N 43/58, A01N 43/653, A01N 43/713, A01N 43/78, A01N 43/80, A01N 43/82**

## Description

The present invention relates to novel fungicidal compositions suitable for control of diseases caused by phytopathogens, especially phytopathogenic fungi and to a method of controlling diseases on useful plants, especially fruits and vegetables.

It is known from WO 2019/093522 that certain 2-hydroxypropanoate derivatives and mixtures comprising said 2-hydroxypropanoate derivatives have biological activity against phytopathogenic fungi. On the other hand various fungicidal compounds of different chemical classes are widely known as plant fungicides for application in various crops of cultivated plants. However, crop tolerance and activity against phytopathogenic plant fungi do not always satisfy the needs of agricultural practice in many incidents and aspects. Especially pathogens which cause leaf spot disease, like Mycosphaerella arachidis the causal agent of peanut leaf spot disease, Corynespora casiicola, the causal agent of target spot of tomato and soybeans, Septoria spp. which cause leaf spots on a broad range of important crops, like wheat and soybean, but also mildews, like Uncinula necator, causal agent of grape powdery mildew and fungal blights, like Botrytis cinerea, causal agent of gray mold of different crop plants become an increasingly important problem in crop production, resulting in considerable yield losses. Many customary fungicides are unsuitable for controlling leaf spot diseases. powdery mildews and gray molds, or their action against Septoria species like Zymoseptoria tritici, Septoria glycines, Uncinula necator and Botrytis cinerea is unsatisfactory.

Out of the above-mentioned needs of agricultural practice for increased crop tolerance and/or increased activity against phytopathogenic fungi, such as leaf spots, powdery mildews and molds, there is therefore proposed in accordance with the present invention a novel composition suitable for control of diseases caused by phytopathogens comprising:

(A) a compound of formula I

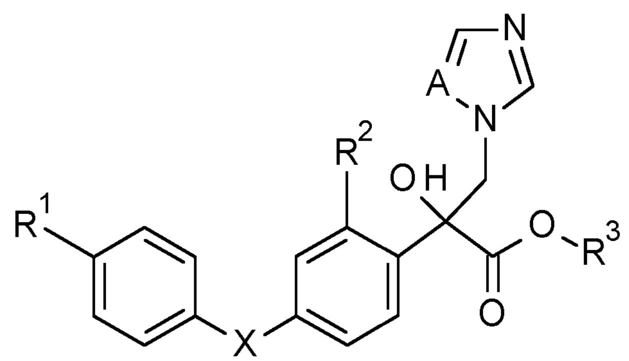

(I)

wherein $R^1$ is chloro, $R_2$ is chloro or trifluoromethyl, $R^3$ is methyl or ethyl, A is N, and X is O; or an stereochemically acceptable salt or N-oxide thereof; and

(B) at least one compound selected from the group consisting of benzothiostrobin, cyclobutrifluram, florylpicoxamid fluopimomide, ipflufenoquin, mandestrobin, metyltetraprole, pyriofenone, pyrisoxazole, or combinations thereof.

The presence of one or more asymmetric carbon atoms in a compound of formula I means that the compounds may occur in optically isomeric forms, i.e. enantiomeric or diastereomeric forms. Also atropisomers may occur as a result of restricted rotation about a single bond. The present invention includes all those possible isomeric forms and mixtures thereof for a compound of formula I. Likewise, formula I is intended to include all possible tautomers. The present invention includes all possible tautomeric forms for a compound of formula I, and also a racemic compound, i.e. a mixture of at least two enantiomers in a ration of substantially 50:50.

In each case, the compounds of formula I according to the invention are in free form, in oxidized form as a N-oxide or in salt form, e.g. an agronomically usable salt form.

N-oxides are oxidized forms of tertiary amines or oxidized forms of nitrogen containing heteroaromatic compounds. They are described for instance in the book "Heterocyclic N-oxides" by A. Albini and S. Pietra, CRC Press, Boca Raton 1991.

It has been found that the use of component (B) in combination with component (A) surprisingly and substantially enhances the effectiveness of the latter against fungi, and vice versa. Additionally, the method of the invention is effective against a wider spectrum of such fungi as compared to those that can be combated with the active ingredients of this method, when used independently and solely.

A further aspect of the present invention is a method of controlling diseases on useful plants or on propagation material thereof caused by phytopathogens, which comprises applying to the useful plants, the locus thereof or propagation material thereof a composition according to the invention. Preferred is a method, which comprises applying

to the useful plants or to the locus thereof a composition according to the invention, more preferably to the useful plants. Further preferred is a method, which comprises applying to the propagation material of the useful plants a composition according to the invention. The invention covers all stereoisomers and mixtures thereof in any ratio.

A preferred embodiment of the invention is represented by those compositions which comprise as component A) a compound of formula (I), wherein A is N and X is O, and wherein $R^1$ is chloro, $R^2$ is chloro, $R^3$ is methyl, A is N and X is O; or $R^1$ is chloro, $R^2$ is chloro, $R^3$ is ethyl, A is N and X is O; or $R^1$ is chloro, $R^2$ is trifluoromethyl, $R^3$ is methyl, A is N and X is O. These preferred compounds of formula (I) are:
Methyl 2-[2-chloro-4-(4-chlorophenoxy)phenyl]-2-hydroxy-3-(1,2,4-triazol-1-yl)propanoate (compound A-1.1); Ethyl 2-[2-chloro-4-(4-chlorophenoxy)phenyl]-2-hydroxy-3-(1,2,4-triazol-1-yl)propanoate (compound A-1.2); and Methyl 2-[4-(4-chlorophenoxy)-2-(trifluoromethyl)phenyl]-2-hydroxy-3-(1,2,4-triazol-1-yl)propanoate (compound A-1.3).

A further preferred embodiment of the invention is represented by those compositions which comprise as component B) a fungicide selected from florylpicoxamid, fluopimomide, ipflufenoquin, mandestrobin, metyltetraprole, pyriofenone, or combinations thereof.

Especially preferred compositions according to the invention comprise as component (A) a compound selected from methyl 2-[2-chloro-4-(4-chlorophenoxy)phenyl]-2-hydroxy-3-(1,2,4-triazol-1-yl)propanoate (compound A-1.1), ethyl 2-[2-chloro-4-(4-chlorophenoxy)-phenyl]-2-hydroxy-3-(1,2,4-triazol-1-yl)propanoate (compound A-1.2) and methyl 2-[4-(4-chlorophenoxy)-2-(trifluoromethyl)phenyl]-2-hydroxy-3-(1,2,4-triazol-1-yl)propanoate (compound A-1.3) and as component (B) a compound selected from florylpicoxamid, fluopimomide, ipflufenoquin, mandestrobin, metyltetraprole pyriofenone, pyrisoxazole.

The compounds of formula (I) may be prepared in analogous manner as outlined in WO 2019/093522, by chemical reactions known in the art.

The components (B) are known. Most of the components (B) are referred to hereinabove by a so-called "ISO common name" or another "common name" being used in individual cases or a trademark name.

The following preferred components (B) are included in the Pesticide Manual Online ("E-pesticide Manual") by the British Crop Production Council and in the Compendium of Pesticide Common Names by Alan Wood: benzothiostrobin, cyclobutrifluram, florylpicoxamid, fluopimomide, ipflufenoquin, mandestrobin, metyltetraprole. pyriofenone, pyrisoxazole.

2-(Difluoromethyl)-N-(1 ,1-dimethyl-3-propyl-indan-4-yl)pyridine-3-carboxamide is disclosed in WO 2019/224175.
N'-(2-chloro-5-methyl-4-phenoxy-phenyl)-N-ethyl-N-methyl-formamidine is disclosed in WO 2017/005710.
N'-[2-chloro-4-(2-fluorophenoxy)-5-methyl-phenyl]-N-ethyl-N-methyl-formamidine is disclosed in WO 2016/202742.
2-[6-(4-Bromophenoxy)-2-(trifluoromethyl)-3-pyridyl]-1-(1,2,4-triazol-1-yl)propan-2-ol is disclosed in WO 2018/145921.
2-[6-(4-Chlorophenoxy)-2-(trifluoromethyl)-3-pyridyl]-1-(1,2,4-triazol-1-yl)propan-2-ol is disclosed in WO 2018/145921.
(Z,2E)-5-[1-(4-chlorophenyl)pyrazol-3-yl]oxy-2-methoxyimino-N,3-dimethyl-pent-3-enamide is disclosed in WO 2013/092224.
(Z,2E)-5-[1-(2,4-dichlorophenyl)pyrazol-3-yl]oxy-2-methoxyimino-N,3-dimethyl-pent-3-enamide is disclosed in WO 2018/153707.
1-(5,6-Dimethyl-3-pyridyl)-4,4-difluoro-3,3-dimethyl-isoquinoline is disclosed in WO 2017/016915.
1-[6-(Difluoromethyl)-5-methyl-3-pyridyl]-4,4-difluoro-3,3-dimethyl-isoquinoline is disclosed in WO 2017/016915.
2,2-Difluoro-N-methyl-2-[4-[5-(trifluoromethyl)-1,2,4-oxadiazol-3-yl]phenyl]acetamide is disclosed in WO 2017/076742.
N-methyl-4-[5-(trifluoromethyl)-1,2,4-oxadiazol-3-yl]benzenecarbothioamide is disclosed in WO 2017/211649.
[1-Methyl-2-(o-tolyl)propyl] (2S)-2-[(3-hydroxy-4-methoxy-pyridine-2-carbonyl)amino]propanoate is disclosed in WO 2019/173665.
[1-Methyl-2-(o-tolyl)propyl] (2S)-2-[(3-acetoxy-4-methoxy-pyridine-2-carbonyl)amino]propanoate is disclosed in WO 2019/173665.
2,2-Difluoro-N-[6-[[1-(1-methyltetrazol-5-yl)benzimidazole-2-yl]oxymethyl]-2-pyridyl]-2-phenoxy-acetamide is disclosed in WO 2017/178819.
N-methyl-4-[5-(trifluoromethyl)-1,2,4-oxadiazol-3-yl]benzamide is disclosed in WO 2017/174158.
3-[2-(1-chlorocyclopropyl)-3-(2-fluorophenyl)-2-hydroxy-propyl]imidazole-4-carbonitrile is disclosed in WO 2016/156290.
3-[2-(1-chlorocyclopropyl)-3-(3-chloro-2-fluorophenyl)-2-hydroxy-propyl]imidazole-4-carbonitrile is disclosed in WO 2016/156290.

Examples of especially suitable compounds as component (B) are compounds selected from the following group P: florylpicoxamid fluopimomide, ipflufenoquin, mandestrobin, metyltetraprole, pyriofenone, pyrisoxazole.

Throughout this document the expression "composition" stands for the various mixtures or combinations of components (A) and (B), for example in a single "ready-mix" form, in a combined spray mixture composed from separate formulations of the single active ingredient components, such as a "tank-mix", and in a combined use of the single active ingredients when applied in a sequential manner, i.e. one after the other with a reasonably short period, such as a few hours or days. The order of applying the components (A) and (B) is not essential for working the present invention.
Further examples for compositions according to the present invention which comprise three active ingredients are defined as embodiments E1, E2 and E3:

Preferred Embodiment E1:

The term "TX1" herein means: "the compound A-1.1 + a compound selected from the group P". Preferred examples include the following compositions: benzothiostrobin + TX1, cyclobutrifluram + TX1, florylpicoxamid + TX1,fluopimomide + TX1, fluoxapiprolin + TX1, ipflufenoquin + TX1, mandestrobin + TX1, metyltetraprole + TX1, pyriofenone + TX1, pyrisoxazole + TX1.

Preferred Embodiment E2:

The term "TX2" means: "the compound A-1.2 + a compound selected from the group P". Preferred examples include the following compositions: benzothiostrobin + TX2, cyclobutrifluram + TX2, florylpicoxamid + TX2, fluopimomide + TX2, ipflufenoquin + TX2, mandestrobin + TX2, metyltetraprole + TX2 pyriofenone + TX2, pyrisoxazole + TX2,

Preferred Embodiment E3:

The term "TX3" means: "the compound A-1.3 + a compound selected from the group P". Preferred examples include the following compositions: benzothiostrobin + TX3, cyclobutrifluram + TX3, florylpicoxamid + TX3, fluopimomide + TX3, ipflufenoquin + TX3, mandestrobin + TX3, metyltetraprole + TX3 pyriofenone + TX3, pyrisoxazole + TX3,
**[0021]** The embodiments E1, E2 and E3 define compositions according to the present invention which comprise 3 active ingredients. In said embodiments, the mixing partner selected from the group P has to be different from the other described mixing partners. For example, the composition "benzothiostrobin + TX1" means compositions comprising as active ingredients benzothiostrobin, the compound A-1.1 + a compound selected from the group P. In said compositions, the compound selected from the group P is different from benzothiostrobin.
The following compositions are preferred:
A composition comprising (A) compound A-1.1 and (B) a compound selected from the group P. An example of such a composition is a composition comprising the compound A-1.1 and the first compound from the group P, which is benzothiostrobin.
The compositions according to the invention are effective against harmful microorganisms, such as microorganisms, that cause phytopathogenic diseases, in particular against phytopathogenic fungi and bacteria.
The compositions according to the invention are effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Phakopsora, Puccinia, Ustilago, Tilletia); Fungi imperfecti (also known as Deuteromycetes; e.g. Botrytis, Helminthosporium, Rhynchosporium, Fusarium, Zymoseptoria, Cercospora, Alternaria, Pyricularia and Pseudocercosporella); Oomycetes (e.g. Phytophthora, Peronospora, Pseudoperonospora, Albugo, Bremia, Pythium, Pseudosclerospora, Plasmopara).
According to the invention "useful plants" typically comprise the following species of plants: grape vines; cereals, such as wheat, barley, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation.
The term "useful plants" is to be understood as including also useful plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering. An example of a crop that has been rendered tolerant to imidazolinones, e.g. imazamox,

by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady® , Herculex I® and LibertyLink®.

The term "useful plants" is to be understood as including also useful plants which have been so transformed by the use of recombinant DNA techniques that they are capable of synthesising one or more selectively acting toxins, such as are known, for example, from toxin-producing bacteria, especially those of the genus Bacillus.

The term "useful plants" is to be understood as including also useful plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above.

The term "locus" of a useful plant as used herein is intended to embrace the place on which the useful plants are growing, where the plant propagation materials of the useful plants are sown or where the plant propagation materials of the useful plants will be placed into the soil. An example for such a locus is a field, on which crop plants are growing.

The term "plant propagation material" is understood to denote generative parts of the plant, such as seeds, which can be used for the multiplication of the latter, and vegetative material, such as cuttings or tubers, for example potatoes. There may be mentioned for example seeds (in the strict sense), roots, fruits, tubers, bulbs, rhizomes and parts of plants. Germinated plants and young plants which are to be transplanted after germination or after emergence from the soil, may also be mentioned. These young plants may be protected before transplantation by a total or partial treatment by immersion. Preferably "plant propagation material" is understood to denote seeds.

In a further aspect, the present application also relates to plant propagation material coated with the compositions according to the invention.

The compositions of the present invention may also be used in the field of protecting storage goods against attack of fungi. According to the present invention, the term "storage goods" is understood to denote natural substances of vegetable and/or animal origin and their processed forms, which have been taken from the natural life cycle and for which long-term protection is desired. Storage goods of vegetable origin, such as plants or parts thereof, for example stalks, leafs, tubers, seeds, fruits or grains, can be protected in the freshly harvested state or in processed form, such as pre-dried, moistened, comminuted, ground, pressed or roasted. Also falling under the definition of storage goods is timber, whether in the form of crude timber, such as construction timber, electricity pylons and barriers, or in the form of finished articles, such as furniture or objects made from wood. Storage goods of animal origin are hides, leather, furs, hairs and the like. The compositions according the present invention can prevent disadvantageous effects such as decay, discoloration or mold. Preferably "storage goods" is understood to denote natural substances of vegetable origin and/or their processed forms, more preferably fruits and their processed forms, such as pomes, stone fruits, soft fruits and citrus fruits and their processed forms. In another preferred embodiment of the invention "storage goods" is understood to denote wood.

Therefore a further aspect of the present invention is a method of protecting storage goods, which comprises applying to the storage goods a composition according to the invention.

The compositions of the present invention may also be used in the field of protecting technical material against attack of fungi. According to the present invention, the term "technical material" includes paper; carpets; constructions; cooling and heating systems; wall-boards; ventilation and air conditioning systems and the like; preferably "technical material" is understood to denote wall-boards. The compositions according the present invention can prevent disadvantageous effects such as decay, discoloration or mold.

The compositions according to the invention may furthermore be particularly effective against seedborne and soilborne diseases, such as Alternaria spp., Ascochyta spp., Botrytis cinerea, Cercospora spp., Claviceps purpurea, Cochliobolus sativus, Colletotrichum spp., Epicoccum spp., Fusarium graminearum, Fusarium moniliforme, Fusarium oxysporum, Fusarium proliferatum, Fusarium solani, Fusarium subglutinans, Gäumannomyces graminis , Helminthosporium spp., Microdochium nivale, Phoma spp., Pyrenophora graminea, Pyricularia oryzae, Rhizoctonia solani, Rhizoctonia cerealis, Sclerotinia spp., Zymoseptoria spp., Sphacelotheca reilliana, Tilletia spp., Typhula incarnata, Urocystis occulta, Ustilago spp. or Verticillium spp.; in particular against pathogens of cereals, such as wheat, barley, rye or oats; maize; rice; cotton; soybean; turf; sugarbeet; oil seed rape; potatoes; pulse crops, such as peas, lentils or chickpea; and sunflower.

The compositions according to the invention may furthermore be particularly effective against post harvest diseasese such as Botrytis cinerea, Colletotrichum musae, Curvularia lunata, Fusarium semitecum, Geotrichum candidum, Monilinia fructicola, Monilinia fructigena, Monilinia laxa, Mucor piriformis, Penicilium italicum, Penicilium solitum, Penicillium digitatum or Penicillium expansum in particular against pathogens of fruits, such as pomefruits, for example apples and pears, stone fruits, for example peaches and plums, citrus, melons, papaya, kiwi, mango, berries, for example

strawberries, avocados, pomegranates and bananas, and nuts.

The compositions according to the invention may be particularly useful for controlling the following diseases on the following crops:

Alternaria species in fruit and vegetables and potato; Botrytis cinerea in strawberries, tomatoes, sunflower, pulse crops, vegetables and grapes; Rhizoctonia solani in potato and vegetables, Uncinula necator in grape, Cladosporium cucumerinum, Didymella bryoniae, Sphaerotheca fuliginea and Glomerella lagenarium in cucurbits, Leveillula taurica in cucurbits and solanacious crops, Fusarium spp in cereals, Septoria spp in cereals, like Zympseptoria tritici, Septoria species in oilseed crops, like Septoria glycines, Cercospora species in tomato, legumes, penatus and oilseed crops, like Mycosphaerella arachidicola in peanuts, or Cercospora sojinae and Cercospora kikuchii in soybeans.

However, besides the actual synergistic action with respect to fungicidal activity, the compositions according to the invention can also have further surprising advantageous properties. Examples of such advantageous properties that may be mentioned are: more advantageuos degradability; improved toxicological and/or ecotoxicological behaviour; or improved characteristics of the useful plants including: emergence, crop yields, more developed root system, tillering increase, increase in plant height, bigger leaf blade, less dead basal leaves, stronger tillers, greener leaf colour, less fertilizers needed, less seeds needed, more productive tillers, earlier flowering, early grain maturity, less plant verse (lodging), increased shoot growth, improved plant vigor, and early germination.

Some compositions according to the invention have a systemic action and can be used as foliar, soil and seed treatment fungicides.

With the compositions according to the invention it is possible to inhibit or destroy the phytopathogenic microorganisms which occur in plants or in parts of plants (fruit, blossoms, leaves, stems, tubers, roots) in different useful plants, while at the same time the parts of plants which grow later are also protected from attack by phytopathogenic microorganisms.

The compositions according to the invention can be applied to the phytopathogenic microorganisms, the useful plants, the locus thereof, the propagation material thereof, storage goods or technical materials threatened by microorganism attack.

The compositions according to the invention may be applied before or after infection of the useful plants, the propagation material thereof, storage goods or technical materials by the microorganisms.

The amount of a composition according to the invention to be applied, will depend on various factors, such as the compounds employed; the subject of the treatment, such as, for example plants, soil or seeds; the type of treatment, such as, for example spraying, dusting or seed dressing; the purpose of the treatment, such as, for example prophylactic or therapeutic; the type of fungi to be controlled or the application time.

When applied to the useful plants component (A) is typically applied at a rate of 5 to 2000 g a.i./ha, particularly 10 to 1000 g a.i./ha, e.g. 50, 75, 100 or 200 g a.i./ha, typically in association with 1 to 5000 g a.i./ha, particularly 2 to 2000 g a.i./ha, e.g. 100, 250, 500, 800, 1000, 1500 g a.i./ha of component (B).

In agricultural practice the application rates of the compositions according to the invention depend on the type of effect desired, and typically range from 20 to 4000 g of total composition per hectare.

When the compositions according to the invention are used for treating seed, rates of 0.001 to 50 g of a compound of component (A) per kg of seed, preferably from 0.01 to 10g per kg of seed, and 0.001 to 50 g of a compound of component (B), per kg of seed, preferably from 0.01 to 10g per kg of seed, are generally sufficient.

The composition of the invention may be employed in any conventional form, for example in the form of a twin pack, a powder for dry seed treatment (DS), an emulsion for seed treatment (ES), a flowable concentrate for seed treatment (FS), a solution for seed treatment (LS), a water dispersible powder for seed treatment (WS), a capsule suspension for seed treatment (CF), a gel for seed treatment (GF), an emulsion concentrate (EC), a suspension concentrate (SC), a suspo-emulsion (SE), a capsule suspension (CS), a water dispersible granule (WG), an emulsifiable granule (EG), an emulsion, water in oil (EO), an emulsion, oil in water (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK), a dispersible concentrate (DC), a wettable powder (WP) or any technically feasible formulation in combination with agriculturally acceptable adjuvants.

Such compositions may be produced in conventional manner, e.g. by mixing the active ingredients with at least one appropriate inert formulation adjuvant (for example, diluents, solvents, fillers and optionally other formulating ingredients such as surfactants, biocides, anti-freeze, stickers, thickeners and compounds that provide adjuvancy effects). Also conventional slow release formulations may be employed where long lasting efficacy is intended. Particularly formulations to be applied in spraying forms, such as water dispersible concentrates (e.g. EC, SC, DC, OD, SE, EW, EO and the like), wettable powders and granules, may contain surfactants such as wetting and dispersing agents and other compounds that provide adjuvancy effects, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

The compositions according to the invention may also comprise further pesticides, such as, for example,

fungicides, insecticides or herbicides.

A seed dressing formulation is applied in a manner known per se to the seeds employing the compositions according to the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid formulation inerts and adjuvant(s), the active agent consisting of at least a compound of component (A) together with a compound of component (B), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

Further characteristics of compositions comprising compounds of formula (I), their application methods to plants and their use rates are as described for compositions comprising compounds of formula (I) and additionally at least one component (B) as described above. Their application can be both before and after the infection of the plants or parts thereof with the fungi. The treatment is preferably carried out prior to the infection. When a compound of formula (I) is used on its own, the application rates in the method accoding to the invention are as described above, e.g. typical are rates of 5 to 2000 g a.i./ha, particularly 10 to 1000 g a.i./ha, e.g. 50, 75, 100 or 200 g a.i./ha. Compounds of formula (I) can be applied to the plants once or more than once during a growing season. For use in the method according to the invention, the compounds of formula (I) can be converted into the customary formulations described above, e.g. solutions, emulsions, suspensions, dusts, powders, pastes and granules. The use form will depend on the particular intended purpose; in each case, it should ensure a fine and even distribution of the compound of formula (I). The term "plant" as used herein includes seedlings, bushes and crops of fruits and vegetables.

The Examples which follow serve to illustrate the invention, "active ingredient" denotes a mixture of component (A) and component (B) in a specific mixing ratio.

The same formulations can be used for compositions comprising only a compound of formula (I) as the active ingredient, as set out in the following tables.

Formulation Examples

Table 1

| Wettable powders | a) | b) |
|---|---|---|
| active ingredient [A): B) = 1:3(a), 1:1(b)] | 25% | 75 % |
| sodium lignosulfonate | 5% | - |
| sodium lauryl sulfate | 3% | 5% |
| sodium diisobutylnaphthalenesulfonate (7-8 mol of ethylene oxide) | | 10 % |
| highly dispersed silicic acid | 5% | 10 % |
| Kaolin | 62% | - |

The active ingredient is thoroughly mixed with the other formulation components and the mixture is thoroughly ground in a suitable mill, affording wettable powders that can be diluted with water to give suspensions of the desired concentration.

Table 2

| Powders for dry seed treatment | a) | b) |
|---|---|---|
| active ingredient [A) : B) = 1:3(a), 1:1(b)] | 25 % | 75 % |
| light mineral oil | 5 % | 5 % |
| highly dispersed silicic acid | 5 % | - |
| kaolin | 65 % | - |
| Talc | - | 20 |

The active ingredient is thoroughly mixed with the other formulation components and the mixture is thoroughly

ground in a suitable mill, affording powders that can be used directly for seed treatment.

Table 3

| Emulsifiable concentrate | |
|---|---|
| active ingredient (A): B) = 1:6) | 10 % |
| octylphenol polyethylene glycol ether (4-5 mol of ethylene oxide) | 3 % |
| calcium dodecylbenzenesulfonate | 3% |
| castor oil polyglycol ether (35 mol of ethylene oxide) | 4% |
| cyclohexanone | 30% |
| xylene mixture | 50% |

Emulsions of any required dilution, which can be used in plant protection, can be obtained from this concentrate by dilution with water.

Table 4

| Dustable powders | a) | b) |
|---|---|---|
| active ingredient [A) : B) = 1:6(a), 1:10(b)] | 5 % | 6 % |
| Talcum | 95 % | - |
| Kaolin | - | 94 % |

Ready-for-use dusts are obtained by mixing the active ingredient with the carriers and grinding the mixture in a suitable mill. Such powders can also be used for dry dressings for seed.

Table 5

| Extruded granules | % w/w |
|---|---|
| active ingredient (A) : B) = 2:1) | 15 % |
| sodium lignosulfonate | 2 % |
| sodium alkyl naphthalene sulfonate | 1 % |
| Kaolin | 82 % |

The active ingredient is mixed and ground with the other formulation components, and the mixture is moistened with water. The mixture is extruded and then dried in a stream of air.

Suspension concentrate

Table 6

| | |
|---|---|
| active ingredient (A) : B) = 1:8) | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the other formulation components, giving a suspension concentrate which can be diluted in water at any desired rate. Using such dilutions, living plants as well as plant propagation material can be treated and protected against infestation by microorganisms, by spraying, pouring or immersion.

Flowable concentrate for seed treatment

Table 7

| | |
|---|---|
| active ingredient (A) : B) = 1:8) | 40% |
| propylene glycol | 5% |
| copolymer butanol PO/EO | 2% |
| tristyrenephenole ethoxylate (with 10-20 moles EO) | 2% |
| 1,2-benzisothiazolin-3-one | 0.5 % |
| monoazo-pigment calcium salt | 5% |
| silicone oil (in the form of a 75 % emulsion in water) | 0.2 % |
| water | 45.3 % |

The finely ground active ingredient is intimately mixed with the other formulation components, giving a suspension concentrate which can be diluted further in water to be applied to seeds. Using such dilutions, propagation material can be treated and protected against infestation by microorganisms, by spraying, pouring or immersion.

Accordingly a further aspect of the present invention is a method of controlling leaf spot diseases on plants which comprises applying to the plants, the locus thereof or propagation material thereof a composition comprising a compound of formula (I).

Preferred is a method wherein the phytopathogen is attacking plants and causing diseases, like leaf spots, powdery mildews, and fungal blight diseases.

Preferred is a method, which comprises applying to the plants or to the locus thereof a composition comprising a compound of formula (I), preferably to the plants.

Further prefered is a method, which comprises applying to the propagation material of the plants a composition comprising a compound of formula (I) Yet further, the present invention also relates to the use of a composition according to the invention for controlling leaf spot diseases on plants.

The methods according to the invention, especially when a compound of formula (I) is used in combination with at least one compound (B) as described above, also allows good control of other harmful fungi frequently encountered in plants.

Preferred is a method of controlling diseases on oilseeds and cereals, especially caused by leaf spot diseases, which comprises applying to the useful plants, the locus thereof or propagation material thereof a composition comprising a compound of formula (I)

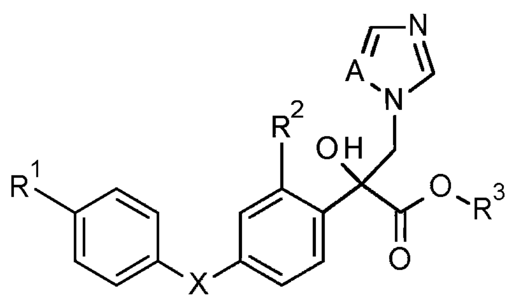

(I)

wherein $R^1$ is chloro, $R^2$ is chloro or trifluoromethyl, $R^3$ is methyl or ethyl, A is N, and X is O; or an stereochemically acceptable salt or N-oxide thereof;

In general, the weight ratio of component (A) to component (B) is in the range of from 2000 : 1 to 1 : 1000. The weight ratio of component (A) to component (B) is preferably from 100 : 1 to 1 : 100; more preferably from 20 : 1 to 1 : 50, yet more preferably from 12 : 1 to 1 : 25; yet more preferably from 10 : 1 to 1 : 10, again more preferably from 5 : 1 to 1 : 15; and most preferably from 2 :1 to 1 : 5.

It has been found, surprisingly, that certain weight ratios of component (A) to component (B) are able to give rise to synergistic activity. Therefore, a further aspect of the invention are compositions, wherein component (A) and component (B) are present in the composition in amounts producing a synergistic effect. This synergistic activity is apparent from the fact that the fungicidal activity of the composition comprising component (A) and component (B) is greater than the sum of the fungicidal activities of component (A) and of component (B).

This synergistic activity extends the range of action of component (A) and component (B) in two ways. Firstly, the

rates of application of component (A) and component (B) are lowered whilst the action remains equally good, meaning that the active ingredient mixture still achieves a high degree of phytopathogen control even where the two individual components have become totally ineffective in such a low application rate range. Secondly, there is a substantial broadening of the spectrum of phytopathogens that can be controlled.

A synergistic effect exists whenever the action of an active ingredient combination is greater than the sum of the actions of the individual components. The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient A) using p ppm of active ingredient
Y = % action by active ingredient B) using q ppm of active ingredient.

According to COLBY, the expected (additive) action of active ingredients A)+B) using p+q ppm of active ingredient is:

$$E = X + Y - \frac{X \cdot Y}{100}$$

If the action actually observed (O) is greater than the expected action (E), then the action of the combination is super-additive, i.e. there is a synergistic effect. In mathematical terms, synergism corresponds to a positive value for the difference of (O-E). In the case of purely complementary addition of activities (expected activity), said difference (O-E) is zero. A negative value of said difference (O-E) signals a loss of activity compared to the expected activity.

Biological Examples

*Corynespora cassiicola (target spot of soybean, target leaf spot of tomato):*

Conidia of the fungus from cryogenic storage were directly mixed into nutrient broth (PDB potato dextrose broth). A DMSO solution of the test compounds was placed into a microtiter plate (96-well format) and the nutrient broth containing the fungal spores was added to it. The test plates were incubated at 24°C and the inhibition of growth was determined photometrically after 3-4 days at 620nm. Rates and results are set ou in the following tables:

Table 8

| Compound A-1.3 | Cyclobutrifluram | Observed | COLBY Expected |
|---|---|---|---|
| ppm | ppm | Activity (%) | Activity (%) |
| 0.03 | 0 | 0 | |
| 0 | 0.05 | 50 | |
| 0 | 0.025 | 20 | |
| 0 | 0.0125 | 0 | |
| 0.03 | 0.05 | 70 | 50 |
| 0.03 | 0.025 | 20 | 20 |
| 0.03 | 0.0125 | 20 | 0 |

Table 9

| Compound A-1.3 | Pyrisoxazole | Observed | COLBY Expected |
|---|---|---|---|
| ppm | ppm | Activity (%) | Activity (%) |
| 0.2 | 0 | 20 | |
| 0 | 1 | 70 | |
| 0 | 0.5 | 20 | |

(continued)

| Compound A-1.3 | Pyrisoxazole | Observed | COLBY Expected |
|---|---|---|---|
| ppm | ppm | Activity (%) | Activity (%) |
| 0.2 | 1 | 90 | 76 |
| 0.2 | 0.5 | 50 | 36 |

*Mycosphaerella arachidis syn. Cercospora arachidicola* (Brown leaf spot of peanut):

Conidia of the fungus from cryogenic storage were directly mixed into nutrient broth (PDB potato dextrose broth). A DMSO solution of the test compounds was placed into a microtiter plate (96-well format) and the nutrient broth containing the fungal spores was added to it.

The test plates were incubated at 24°C and the inhibition of growth was determined photometrically after 5-6 days at 620nm.

Table 10

| Compound A-1.3 | Pyriofenone | Observed | COLBY Expected |
|---|---|---|---|
| Ppm | ppm | Activity (%) | Activity (%) |
| 0.03 | 0 | 50 | |
| 0 | 20 | 0 | |
| 0 | 10 | 0 | |
| 0 | 5 | 0 | |
| 0 | 2.5 | 0 | |
| 0.03 | 20 | 70 | 50 |
| 0.03 | 10 | 70 | 50 |
| 0.03 | 5 | 70 | 50 |
| 0.03 | 2.5 | 70 | 50 |

*Septoria tritici* (leaf blotch):

Conidia of the fungus from cryogenic storage were directly mixed into nutrient broth (PDB potato dextrose broth). A DMSO solution of the test compounds was placed into a microtiter plate (96-well format) and the nutrient broth containing the fungal spores was added to it. The test plates were incubated at 24°C and the inhibition of growth was determined photometrically after 72 hrs.

Table 11

| Compound A-1.3 | Pyrisoxazole | Observed | COLBY Expected |
|---|---|---|---|
| Ppm | ppm | Activity (%) | Activity (%) |
| 0.03 | 0 | 0 | |
| 0 | 0.5 | 20 | |
| 0 | 0.25 | 0 | |
| 0.03 | 0.5 | 70 | 20 |
| 0.03 | 0.25 | 50 | 0 |

Table 12

| Compound A-1.3 | Pyrisoxazole | Observed | COLBY Expected |
|---|---|---|---|
| Ppm | ppm | Activity (%) | Activity (%) |
| 0.06 | 0 | 70 | |
| 0 | 1 | 90 | |
| 0 | 0.5 | 70 | |
| 0 | 0.25 | 0 | |
| 0 | 0.125 | 0 | |
| 0 | 0.0625 | 0 | |
| 0.06 | 1 | 100 | 97 |
| 0.06 | 0.5 | 100 | 91 |
| 0.06 | 0.25 | 100 | 70 |
| 0.06 | 0.125 | 90 | 70 |
| 0.06 | 0.0625 | 90 | 70 |

*Septoria glycines* (brown spot):

Conidia of the fungus from cryogenic storage were directly mixed into nutrient broth (PDB potato dextrose broth). A DMSO solution of the test compounds was placed into a microtiter plate (96-well format) and the nutrient broth containing the fungal spores was added to it. The test plates were incubated at 24°C and the inhibition of growth was determined visually after 72 hrs.

Table 13

| Compound A-1.3 | Cyclobutrifluram | Observed | COLBY Expected |
|---|---|---|---|
| ppm | ppm | Activity (%) | Activity (%) |
| 0.03 | 0 | 0 | |
| 0 | 0.2 | 90 | |
| 0 | 0.1 | 90 | |
| 0 | 0.05 | 70 | |
| 0.03 | 0.2 | 100 | 90 |
| 0.03 | 0.1 | 100 | 90 |
| 0.03 | 0.05 | 90 | 70 |

Table 14

| Compound A-1.3 | Cyclobutrifluram | Observed | COLBY Expected |
|---|---|---|---|
| Ppm | ppm | Activity (%) | Activity (%) |
| 0.06 | 0 | 20 | |
| 0 | 0.2 | 90 | |
| 0 | 0.1 | 70 | |
| 0 | 0.05 | 70 | |
| 0 | 0.025 | 50 | |
| 0 | 0.0125 | 20 | |
| 0.06 | 0.2 | 100 | 92 |
| 0.06 | 0.1 | 100 | 76 |

(continued)

| Compound A-1.3 | Cyclobutrifluram | Observed | COLBY Expected |
|---|---|---|---|
| Ppm | ppm | Activity (%) | Activity (%) |
| 0.06 | 0.05 | 100 | 76 |
| 0.06 | 0.025 | 70 | 60 |
| 0.06 | 0.0125 | 50 | 36 |

Table 15

| Compound A-1.3 | Florylpicoxamid | Observed | COLBY Expected |
|---|---|---|---|
| Ppm | ppm | Activity (%) | Activity (%) |
| 0.03 | 0 | 0 | |
| 0 | 0.1 | 90 | |
| 0 | 0.05 | 70 | |
| 0.03 | 0.1 | 100 | 90 |
| 0.03 | 0.05 | 90 | 70 |

Table 16

| Compound A-1.3 | Ipflufenoquin | Observed | COLBY Expected |
|---|---|---|---|
| ppm | ppm | Activity (%) | Activity (%) |
| 0.03 | 0 | 0 | |
| 0 | 1.25 | 90 | |
| 0 | 0.6125 | 70 | |
| 0.03 | 1.25 | 90 | 90 |
| 0.03 | 0.6125 | 90 | 70 |

Table 17

| Compound A-1.3 | Mandestrobin | Observed | COLBY Expected |
|---|---|---|---|
| Ppm | ppm | Activity (%) | Activity (%) |
| 0.03 | 0 | 0 | |
| 0 | 0.5 | 90 | |
| 0 | 0.25 | 70 | |
| 0 | 0.125 | 50 | |
| 0.03 | 0.5 | 100 | 90 |
| 0.03 | 0.25 | 100 | 70 |
| 0.03 | 0.125 | 70 | 50 |

Table 18

| Compound A-1.3 | Mandestrobin | Observed | COLBY Expected |
|---|---|---|---|
| Ppm | ppm | Activity % | Activity (%) |
| 0.06 | 0 | 20 | |
| 0 | 1 | 90 | |
| 0 | 0.5 | 70 | |

(continued)

| Compound A-1.3 | Mandestrobin | Observed | COLBY Expected |
|---|---|---|---|
| Ppm | ppm | Activity % | Activity (%) |
| 0 | 0.25 | 70 | |
| 0.06 | 1 | 100 | 92 |
| 0.06 | 0.5 | 90 | 76 |
| 0.06 | 0.25 | 70 | 76 |

Table 19

| Compound A-1.3 | Metyltetraprole | Observed | COLBY Expected |
|---|---|---|---|
| Ppm | ppm | Activity (%) | Activity (%) |
| 0.03 | 0 | 0 | |
| 0 | 0.0125 | 90 | |
| 0 | 0.00625 | 70 | |
| 0 | 0.003125 | 50 | |
| 0.03 | 0.0125 | 100 | 90 |
| 0.03 | 0.00625 | 90 | 70 |
| 0.03 | 0.003125 | 70 | 50 |

Table 20

| Compound A-1.3 | Fluopimomide | Observed | COLBY Expected |
|---|---|---|---|
| ppm | ppm | Activity (%) | Activity (%) |
| 0.06 | 0 | 20 | |
| 0 | 20 | 0 | |
| 0 | 10 | 0 | |
| 0 | 5 | 0 | |
| 0 | 2.5 | 0 | |
| 0 | 1.25 | 0 | |
| 0.06 | 20 | 70 | 20 |
| 0.06 | 10 | 70 | 20 |
| 0.06 | 5 | 50 | 20 |
| 0.06 | 2.5 | 50 | 20 |
| 0.06 | 1.25 | 50 | 20 |

Table 21

| Compound A-1.3 | Pyriofenone | Observed | COLBY Expected |
|---|---|---|---|
| ppm | ppm | Activity (%) | Activity (%) |
| 0.06 | 0 | 20 | |
| 0 | 20 | 20 | |
| 0 | 10 | 20 | |
| 0 | 5 | 20 | |
| 0 | 2.5 | 20 | |

(continued)

| Compound A-1.3 | Pyriofenone | Observed | COLBY Expected |
|---|---|---|---|
| ppm | ppm | Activity (%) | Activity (%) |
| 0 | 1.25 | 20 | |
| 0.06 | 20 | 90 | 36 |
| 0.06 | 10 | 90 | 36 |
| 0.06 | 5 | 90 | 36 |
| 0.06 | 2.5 | 70 | 36 |
| 0.06 | 1.25 | 50 | 36 |

Table 22

| Compound A-1.3 | Benzothiostrobin | Observed | COLBY Expected |
|---|---|---|---|
| ppm | ppm | Activity (%) | Activity (%) |
| 0.06 | 0 | 20 | |
| 0 | 0.2 | 90 | |
| 0 | 0.1 | 90 | |
| 0 | 0.05 | 90 | |
| 0 | 0.025 | 70 | |
| 0 | 0.0125 | 50 | |
| 0.06 | 0.2 | 100 | 92 |
| 0.06 | 0.1 | 100 | 92 |
| 0.06 | 0.05 | 100 | 92 |
| 0.06 | 0.025 | 90 | 76 |
| 0.06 | 0.0125 | 70 | 60 |

Table 23

| Compound A-1.3 | Metyltetraprole | Observed | COLBY Expected |
|---|---|---|---|
| ppm | ppm | Activity (%) | Activity (%) |
| 0.06 | 0 | 20 | |
| 0 | 0.1 | 90 | |
| 0 | 0.05 | 90 | |
| 0 | 0.025 | 90 | |
| 0 | 0.0125 | 70 | |
| 0 | 0.00625 | 70 | |
| 0 | 0.003125 | 20 | |
| 0.06 | 0.1 | 100 | 92 |
| 0.06 | 0.05 | 100 | 92 |
| 0.06 | 0.025 | 100 | 92 |
| 0.06 | 0.0125 | 90 | 76 |
| 0.06 | 0.00625 | 90 | 76 |
| 0.06 | 0.003125 | 50 | 36 |

## Claims

1. A composition suitable for control of diseases caused by phytopathogens, the composition comprising:

(A) a compound of formula I:

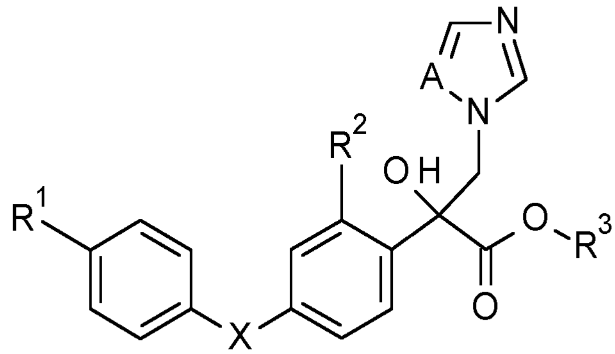

(I)

wherein $R^1$ is chloro, $R^2$ is chloro or trifluoromethyl, $R^3$ is methyl or ethyl, A is N and X is O; or an agrochemically acceptable salt or N-oxide thereof, and

(B) at least one compound selected from benzothiostrobin, cyclobutrifluram, florylpicoxamid, fluopimomide, ipflufenoquin, mandestrobin, metyltetraprole, pyriofenone, pyrisoxazole, or combinations thereof.

2. A composition according to claim 1, wherein component (A) is methyl 2-[2-chloro-4-(4-chlorophenoxy)phenyl]-2-hydroxy-3-(1,2,4-triazol-1-yl)propanoate or ethyl 2-[2-chloro-4-(4-chlorophenoxy)phenyl]-2-hydroxy-3-(1,2,4-triazol-1-yl)propanoate, and wherein component (B) is a fungicide selected from florylpicoxamid, fluopimomide, ipflufenoquin, mandestrobin, metyltetraprole, pyriofenone, pyrisoxazole, or combinations thereof.

3. A composition according to claim 1, wherein component (A) is methyl 2-[4-(4-chlorophenoxy)-2-(trifluoromethyl) phenyl]-2-hydroxy-3-(1,2,4-triazol-1-yl)propanoate, and component (B) is a fungicide selected from florylpicoxamid, fluopimomide, ipflufenoquin, mandestrobin, metyltetraprole, pyriofenone, pyrisoxazole, or combinations thereof.

4. A composition according to any of the preceding claims, wherein the weight ratio of (A) to (B) is in the range of from 2000:1 to 1:1000, preferably 100:1 to 1:100; more preferably 20:1 to 1:40; yet more preferably 12:1 to 1:25; yet more preferably of from 5:1 to 1:15; and again more preferably of from 2:1 to 1:5.

5. A composition according to any of claims 1 to 4, wherein the composition comprises at least one or more further insecticidally, acaricidally, nematicidally and/or fungicidally active agent(s).

6. A composition according to claim 5, wherein the further active agent(s) comprises one or more pesticides selected from at least one compound selected from florylpicoxamid, flubeneteram, fluopimomide, fluoxapiprolin, ipflufenoquin, mandestrobin, metyltetraprole, pyriofenone, pyrisoxazole, 2-(difluoromethyl)-N-(1,1-dimethyl-3-propyl-indan-4-yl) pyridine-3-carboxamide, N'-(2-chloro-5-methyl-4-phenoxy-phenyl)-N-ethyl-N-methyl-formamidine, 2-[6-(4-bromophenoxy)-2-(trifluoromethyl)-3-pyridyl]-1-(1,2,4-triazol-1-yl)propan-2-ol, (Z,2E)-5-[1-(2,4-dichlorophenyl)pyrazol-3-yl]oxy-2-methoxyimino-N,3-dimethyl-pent-3-enamide, 1-(5,6-dimethyl-3-pyridyl)-4,4-difluoro-3,3-dimethyl-isoquinoline, 1-[6-(difluoromethyl)-5-methyl-3-pyridyl]-4,4-difluoro-3,3-dimethyl-isoquinoline, 2,2-difluoro-N-methyl-2-[4-[5-(trifluoromethyl)-1,2,4-oxadiazol-3-yl]phenyl]acetamide, N-methyl-4-[5-(trifluoromethyl)-1,2,4-oxadiazol-3-yl]benzenecarbothioamide, [1-methyl-2-(o-tolyl)propyl] (2S)-2-[(3-acetoxy-4-methoxy-pyridine-2-carbonyl)amino]propanoate, wherein the at least one or more further pesticide is selected from the group defined herein above, but different from Component (B).

7. A composition according to any one of claims 1 to 6, further comprising an agriculturally acceptable carrier and, optionally, a surfactant and/or formulation adjuvant(s).

8. A method of controlling diseases on useful plants or on propagation material thereof caused by phytopathogens, comprising applying to the useful plants, the locus thereof or propagation material thereof a composition according to any one of claims 1 to 7.

**9.** A method according to claim 8, wherein the composition components (A) and (B) are applied in a simultaneous, intermittent, or sequential manner.

**10.** A coated plant propagation material, wherein the coating of the plant propagation material comprises a composition according to any one of claims 1 to 7.

**Patentansprüche**

**1.** Zusammensetzung, die sich für die Bekämpfung von durch Phytopathogene verursachten Krankheiten eignet, wobei die Zusammensetzung Folgendes umfasst:

(A) eine Verbindung der Formel I:

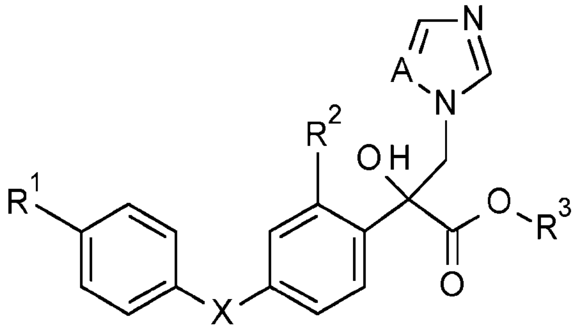

(I)

wobei $R^1$ für Chlor steht, $R^2$ für Chlor oder Trifluormethyl steht, $R^3$ für Methyl oder Ethyl steht, A für N steht und X für O steht; oder ein agrochemisch unbedenkliches Salz oder N-Oxid davon und
(B) mindestens eine Verbindung, die aus Benzothiostrobin, Cyclobutrifluram, Florylpicoxamid, Fluopimomid, Ipflufenoquin, Mandestrobin, Metyltetraprol, Pyriofenon, Pyrisoxazol oder Kombinationen davon ausgewählt ist.

**2.** Zusammensetzung nach Anspruch 1, wobei es sich bei Komponente (A) um 2-[2-Chlor-4-(4-chlorphenoxy)phenyl]-2-hydroxy-3-(1,2,4-triazol-1-yl)propansäuremethylester oder 2-[2-Chlor-4-(4-chlorphenoxy)phenyl]-2-hydroxy-3-(1,2,4-triazol-1-yl)propansäureethylester handelt und wobei es sich bei Komponente (B) um ein Fungizid handelt, das aus Florylpicoxamid, Fluopimomid, Ipflufenoquin, Mandestrobin, Metyltetraprol, Pyriofenon, Pyrisoxazol oder Kombinationen davon ausgewählt ist.

**3.** Zusammensetzung nach Anspruch 1, wobei es sich bei Komponente (A) um 2-[4-(4-Chlorphenoxy)-2-(trifluormethyl) phenyl]-2-hydroxy-3-(1,2,4-triazol-1-yl)propansäuremethylester handelt und es sich bei Komponente (B) um ein Fungizid handelt, das aus Florylpicoxamid, Fluopimomid, Ipflufenoquin, Mandestrobin, Metyltetraprol, Pyriofenon, Pyrisoxazol oder Kombinationen davon ausgewählt ist.

**4.** Zusammensetzung nach einem der vorhergehenden Ansprüche, wobei das Gewichtsverhältnis von (A) zu (B) im Bereich von 2000:1 bis 1:1000, vorzugsweise 100:1 bis 1:100, weiter bevorzugt 20:1 bis 1:40, noch weiter bevorzugt 12:1 bis 1:25, noch weiter bevorzugt von 5:1 bis 1:15 und wiederum weiter bevorzugt von 2:1 bis 1:5 liegt.

**5.** Zusammensetzung nach einem der Ansprüche 1 bis 4, wobei die Zusammensetzung mindestens einen oder mehrere weitere insektizide, akarizide, nematizide und/oder fungizide Wirkstoffe umfasst.

**6.** Zusammensetzung nach Anspruch 5, wobei der weitere Wirkstoff bzw. die weiteren Wirkstoffe ein oder mehrere Pestizide umfassen, das bzw. die aus mindestens einer Verbindung ausgewählt ist bzw. sind, die aus Florylpicoxamid, Flubeneteram, Fluopimomid, Fluoxapiprolin, Ipflufenoquin, Mandestrobin, Metyltetraprol, Pyriofenon, Pyrisoxazol, 2-(Difluormethyl)-N-(1,1-dimethyl-3-propyl-indan-4-yl)pyridin-3-carboxamid, N'-(2-Chlor-5-methyl-4-phenoxyphenyl)-N-ethyl-N-methylformamidin, 2-[6-(4-Bromphenoxy)-2-(trifluormethyl)-3-pyridyl]-1-(1,2,4-triazol-1-yl) propan-2-ol, (Z,2E)-5-[1-(2,4-Dichlorphenyl)pyrazol-3-yl]oxy-2-methoxyimino-N,3-dimethylpent-3-enamid, 1-(5,6-Dimethyl-3-pyridyl)-4,4-difluor-3,3-dimethylisochinolin, 1-[6-(Difluormethyl)-5-methyl-3-pyridyl]-4,4-difluor-3,3-dimethylisochinolin, 2,2-Difluor-N-methyl-2-[4-[5-(trifluormethyl)-1,2,4-oxadiazol-3-yl]phenyl]acetamid, N-Methyl-4-[5-(trifluormethyl)-1,2,4-oxadiazol-3-yl]benzolcarbothioamid und (2S)-2-[(3-Acetoxy-4-methoxypyridin-2-carbonyl)amino]propansäure[1-methyl-2-(o-tolyl)propyl]ester ausgewählt ist, wobei das mindestens eine bzw. die mehreren weiteren Pestizid(e) aus der oben definierten Gruppe ausgewählt ist bzw. sind, aber von Komponente (B) verschieden ist bzw. sind.

**7.** Zusammensetzung nach einem der Ansprüche 1 bis 6, ferner umfassend einen landwirtschaftlich unbedenklichen Träger und gegebenenfalls ein Tensid und/oder ein oder mehrere Formulierungsadjuvantien.

**8.** Verfahren zur Bekämpfung von durch Phytopathogene verursachten Krankheiten auf Nutzpflanzen oder auf deren Vermehrungsmaterial, bei dem man auf die Nutzpflanzen, ihren Standort oder ihr Vermehrungsmaterial eine Zusammensetzung nach einem der Ansprüche 1 bis 7 ausbringt.

**9.** Verfahren nach Anspruch 8, bei dem man die Zusammensetzungskomponenten (A) und (B) gleichzeitig, intermittierend oder nacheinander ausbringt.

**10.** Beschichtetes Pflanzenfortpflanzungsmaterial, wobei die Beschichtung des Pflanzenfortpflanzungsmaterials eine Zusammensetzung nach einem der Ansprüche 1 bis 7 umfasst.

**Revendications**

**1.** Composition convenable pour la régulation de maladies provoquées par des organismes phytopathogènes, la composition comprenant :

(A) un composé de formule I :

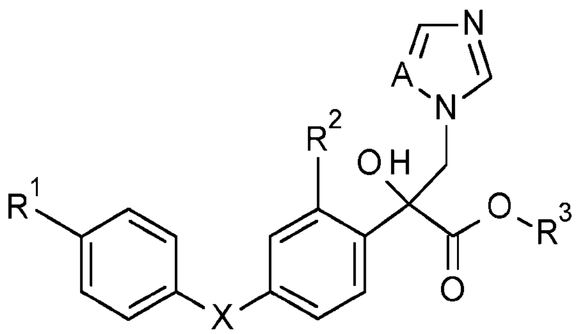

(I)

dans laquelle $R^1$ est chloro, $R^2$ est chloro ou trifluorométhyle, $R^3$ est méthyle ou éthyle, A est N et X est 0 ; ou un sel ou N-oxyde acceptable sur le plan agrochimique correspondant, et

(B) au moins un composé choisi parmi benzothiostrobine, cyclobutrifluram, florylpicoxamide, fluopimomide, ipflufénoquine, mandestrobine, méthyltétraprole, pyriofénone, pyrisoxazole ou des combinaisons de ceux-ci.

**2.** Composition selon la revendication 1, dans laquelle le composant (A) est 2-[2-chloro-4-(4-chlorophénoxy)phényl]-2-hydroxy-3-(1,2,4-triazol-1-yl)propanoate de méthyle ou 2-[2-chloro-4-(4-chlorophénoxy)phényl]-2-hydroxy-3-(1,2,4-triazol-1-yl)propanoate d'éthyle, et dans laquelle le composant (B) est un fongicide choisi parmi florylpicoxamide, fluopimomide, ipflufénoquine, mandestrobine, méthyltétraprole, pyriofénone, pyrisoxazole ou des combinaisons de ceux-ci.

**3.** Composition selon la revendication 1, dans laquelle le composant (A) est 2-[4-(4-chlorophénoxy)-2-(trifluorométhyl)phényl]-2-hydroxy-3-(1,2,4-triazol-1-yl)propanoate de méthyle, et le composant (B) est un fongicide choisi parmi florylpicoxamide, fluopimomide, ipflufénoquine, mandestrobine, méthyltétraprole, pyriofénone, pyrisoxazole ou des combinaisons de ceux-ci.

**4.** Composition selon l'une quelconque des revendications précédentes, dans laquelle le rapport pondéral de (A) sur (B) est dans la plage de 2 000:1 à 1:1 000, de préférence 100:1 à 1:100 ; plus préférablement 20:1 à 1:40 ; encore plus préférablement 12:1 à 1:25 ; encore plus préférablement de 5:1 à 1:15 ; et à nouveau plus préférablement de 2:1 à 1:5.

**5.** Composition selon l'une quelconque des revendications 1 à 4, dans laquelle la composition comprend au moins un ou

plusieurs agents actifs sur le plan insecticide, sur le plan acaricide, sur le plan nématicide et/ou sur le plan fongicide.

6. Composition selon la revendication 5, dans laquelle le ou les autres agents actifs comprennent un ou plusieurs pesticides choisis parmi au moins un composé choisi parmi florylpicoxamide, flubénétéram, fluopimomide, fluoxapiproline, ipflufénoquine, mandestrobine, méthyltétraprole, pyriofénone, pyrisoxazole, 2-(difluorométhyl)-N-(1,1-diméthyl-3-propyl-indan-4-yl)pyridine-3-carboxamide, N'-(2-chloro-5-méthyl-4-phénoxy-phényl)-N-éthyl-N-méthyl-formamidine, 2-[6-(4-bromophénoxy)-2-(trifluorométhyl)-3-pyridyl]-1-(1,2,4-triazol-1-yl)propan-2-ol, (Z,2E)-5-[1-(2,4-dichlorophényl)pyrazol-3-yl]oxy-2-méthoxyimino-N,3-diméthyl-pent-3-énamide, 1-(5,6-diméthyl-3-pyridyl)-4,4-difluoro-3,3-diméthyl-isoquinoléine, 1-[6-(difluorométhyl)-5-méthyl-3-pyridyl]-4,4-difluoro-3,3-diméthyl-isoquinoléine, 2,2-difluoro-N-méthyl-2-[4-[5-(trifluorométhyl)-1,2,4-oxadiazol-3-yl]phényl]acétamide, N-méthyl-4-[5-(trifluorométhyl)-1,2,4-oxadiazol-3-yl]benzènecarbothioamide, (2S)-2-[(3-acétoxy-4-méthoxy-pyridine-2-carbonyl)amino]propanoate de [1-méthyl-2-(o-tolyl)propyle], dans laquelle l'au moins un pesticide supplémentaire est choisi dans le groupe défini ici ci-dessus, mais différent du composant (B).

7. Composition selon l'une quelconque des revendications 1 à 6, comprenant en outre un support acceptable sur le plan agricole et, éventuellement, un tensioactif et/ou un ou plusieurs adjuvants de formulation.

8. Procédé de lutte contre des maladies sur des végétaux utiles ou sur un matériel de propagation de ceux-ci par des phytopathogènes, comprenant l'application sur les végétaux utiles, le site de ceux-ci ou le matériel de propagation de ceux-ci, d'une composition selon l'une quelconque des revendications 1 à 7.

9. Procédé selon la revendication 8, dans lequel les composants (A) et (B) de composition sont appliqués de manière simultanée, intermittente ou séquentielle.

10. Matériel de propagation végétal revêtu, dans lequel le revêtement du matériel de propagation végétal comprend une composition selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019093522 A
- WO 2019224175 A
- WO 2017005710 A
- WO 2016202742 A
- WO 2018145921 A
- WO 2013092224 A
- WO 2018153707 A
- WO 2017016915 A
- WO 2017076742 A
- WO 2017211649 A
- WO 2019173665 A
- WO 2017178819 A
- WO 2017174158 A
- WO 2016156290 A
- EP 0392225 A
- WO 9533818 A
- EP 0353191 A


### Non-patent literature cited in the description


- **A. ALBINI** ; **S. PIETRA**. Heterocyclic N-oxides. CRC Press, 1991
- **COLBY, S.R.** Calculating synergistic and antagonistic responses of herbicide combination. *Weeds*, 1967, vol. 15, 20-22